# EUROPÄISCHE PATENTSCHRIFT

(11) **EP 0 650 209 B1**
(45) Veröffentlichungstag und Bekanntmachung des Hinweises auf die Patenterteilung: **31.03.1999**
(21) Anmeldenummer: 94116218.2
(22) Anmeldetag: 14.10.1994
(51) Int. Cl.: H01M 6/52

(54) **Verfahren zur hydrometallurgischen Aufbereitung von verbrauchten Haushalts- und Gerätebatterien**
Method for hydrometallurgical treatment of used batteries
Procédé hydrométallurgique pour le traitement de batteries épuisées

(30) Priorität: 22.10.1993 DE 4336124
(43) Veröffentlichungstag der Anmeldung: 26.04.1995
(73) Patentinhaber: Keramchemie GmbH, D-56427 Siershahn (DE)
(72) Erfinder: Brandt, Birgit, Dr., D-96515 Sonneberg (DE); Schöpping, Siegfried, Dipl.-Ing., D-56414 Steinefrenz (DE); Fröhlich, Siegmund, Dr. Dipl.-Ing., D-56244 Wirges (DE)
(74) Vertreter: Kossobutzki, Walter, Dipl.-Ing.(FH)

(56) Entgegenhaltungen:
- EP-A- 0 069 117
- EP-A- 0 274 059
- EP-A- 0 409 792
- EP-A- 0 483 017
- EP-A- 0 581 995
- EP-A- 0 620 607
- CH-A- 676 169
- PATENT ABSTRACTS OF JAPAN vol. 11, no. 124 (C-416) (2571) 19. November 1986 & JP-A-61 261 443 (NIPPON MONING CO LTD) 16. Mai 1985

## Beschreibung

Die Erfindung bezieht sich auf ein Verfahren zur hydrometallurgischen Aufbereitung von verbrauchten Haushalts- und Gerätebatterien zur Wiedergewinnung der metallischen Rohstoffe, insbesondere Zink, Nickel, Cadmium, Kupfer, Lithium und Mangan, bei dem das durch Zerkleinerung der Batterien und Abtrennung von Reststoffen entstandene feine Pulver mittels einer Säure aufgeschlossen und dabei der in dieser Säure lösliche Anteil der metallischen Inhaltsstoffe des Pulvers extrahiert wird.

In der Bundesrepublik Deutschland fallen derzeit jährlich etwa 25.000 t verbrauchter Haushalts- und Gerätebatterien an, die entweder direkt im allgemeinen Müll landen oder bei ausreichendem Umweltbewußtsein gesammelt und später auf besondere Deponien gelagert werden. Diese deponierten Altbatterien stellen aufgrund ihrer toxischen Bestandteile eine nicht unbeachtliche Umweltgefahr dar. Andererseits enthalten diese verbrauchten Altbatterien jedoch wertvolle Rohstoffe, die bei der Deponierung verloren gehen.

Um die Gefahr einer Umweltbelastung zu vermeiden und die Rohstoffe der verbrauchten Altbatterien zurückzugewinnen, wurde bereits vorgeschlagen, die Altbatterien zu zerkleinern und dabei, soweit wie möglich, die Reststoffe, wie Eisen, Aluminium, Buntmetalle, Kunststoffe und Papier, abzutrennen und das verbleibende, pulverförmige Produkt, welches dann im wesentlichen nur noch Zink, Nickel, Cadmium, Kupfer, Lithium und Mangan in unterschiedlicher Form enthält, mit einer reinen, jedoch verdünnten Säure aufzuschließen, was zwangsläufig mit einem hohen Chemikalienverbrauch und damit mit hohen Betriebskosten verbunden ist.

Die säurehaltige Metallsalzlösung wird dann durch mehrere Ionenaustauscher bzw. Ionenaustauschergruppen geleitet, in denen jeweils ein Metall und/oder eine Metallegierung abgetrennt wird. Nach vollständiger Beladung der jeweiligen Ionenaustauscher wird das abgeschiedene Metall zunächst mittels einer Säure eluiert und anschließend durch eine Elektrolyse aufgearbeitet. Bei einer Aufarbeitung durch eine Elektrolyse wird das Metall und/oder die Metallegierung weitgehend abgeschieden und die Elektrolytlösung, die jetzt stark säurehaltig, jedoch an Metall verarmt ist, abgezogen. Diese an Metallen verarmte Elektrolytlösung, die sogenannte Zellensäure, wird dann bei dem vorbekannten Verfahren nochmals mit Hilfe einer Diffusionsdialyse bzw. einer Elektrodialyse sowie einer zusätzlichen Umkehrosmose aufgearbeitet und dabei eine technisch reine Säure zurückgewonnen, die dann wieder zum Aufschluß des metallischen Pulvers verwendet wird. Diese Verfahrensschritte zur Rückgewinnung der technisch reinen Säure sind mit einem nicht vertretbar hohen Investitionsaufwand verbunden und erfordern zusätzlich hohe Betriebskosten.

Aus der CH-PS 676 169 ist ein Verfahren zur naßchemischen Aufbereitung verbrauchter Kleinbatterien bekannt, bei dem die Kleinbatterien mechanisch aufgerissen und zu Pulver zerkleinert werden. DiesesPulver wird durch eine Kombination von weitgehend naßchemischen Prozessen in geeignete Formen übergeführt und in verschiedene Fraktionen zerlegt, aus denen die wertvollen Materialien Zink, Mangangdioxid, Quecksilber, Eisen und Kupfer zurückgewonnen werden. Dazu wird das Pulver mittels einer Säure aufgeschlossen und in Lösung gebracht. Aus dieser Lösung werden in einem gekoppelten Arbeitsschritt Zink und Mangan bzw. Mangandioxid elektrolytisch abgeschieden. Kupfer, Silber und Quecksilber können vor der Elektrolyse durch Zugabe von metallischem Zink auszementiert abgetrennt werden. Ferner ist es offenbart, Quecksilber abzudestillieren und Buntmetalle durch Schlämmen von Kohlepulver abzutrennen. Schließlich ist es möglich, die zerkleinerten Batterien mit Wasser auszuwaschen und dadurch zunächst vom Elektrolyt zu trennen. Durch Behandlung mit verdünnter Schwefelsäure gehen Zink und Mangan als Sulfate in die Lösung über. Anschließend wird mit einer Siebvorrichtung die Feinfraktion abgetrennt. Diese Feinfraktion wird durch chemische Extraktion mit verdünnter Salpetersäure von Quecksilber und Silber befreit. Anschließend werden diese Metalle gemeinsam aus der Lösung elektrolytisch abgeschieden und durch Destillation voneinander getrennt.

Der Erfindung liegt deshalb die Aufgabe zugrunde, ein Verfahren zur hydrometallurgischen Aufbereitung von verbrauchten Haushalts- und Gerätebatterien zur Wiedergewinnung der Rohstoffe aufzuzeigen, bei dem bei einer Verringerung des Investitionsaufwandes und einer Reduzierung der Betriebskosten der Verbrauch an Chemikalien verhältnismäßig gering gehalten werden kann.

Zur Lösung dieser Aufgabe wird gemäß der Erfindung bei einem Verfahren der eingangs beschriebenen Gattung vorgeschlagen, daß die in Lösung gebrachten metallischen Inhaltsstoffe des Pulvers durch getrennte Extraktionsstufen voneinander separiert werden, daß die so separierten Metallösungen getrennt voneinander elektrolysiert werden und daß die an den jeweiligen Metallen verarmten Elektrolytlösungen nach der Elektrolyse ohne Trennung der Säure vom Restmetallgehalt zum Aufschluß des gemahlenen Batterie-Pulvers verwendet werden.

Durch ein derartiges Verfahren kann die bisher als erforderlich erachtete Aufarbeitung der stark säurehaltigen, jedoch an Metall verarmten Elektrolytlösung entfallen. Die stark säurehaltigen Elektrolytlösungen werden direkt zur Extraktion verwendet, was eine Einsparung an Investitions- und Betriebskosten mit sich bringt. Eine Erhöhung des Chemikalienverbrauches tritt dadurch nicht auf. Gemäß einem weiteren Merkmal des Verfahrens kann die stark säurehaltige und an Metall verarmte Elektrolytlösung ohne Trennung der Säure vom Restmetallgehalt zur Metall-Reextraktion verwendet werden.

Die Erfindung wird nachfolgend anhand eines in einer Zeichnung in vereinfachter Weise dargestellten Ausführungsbeispieles näher erläutert.

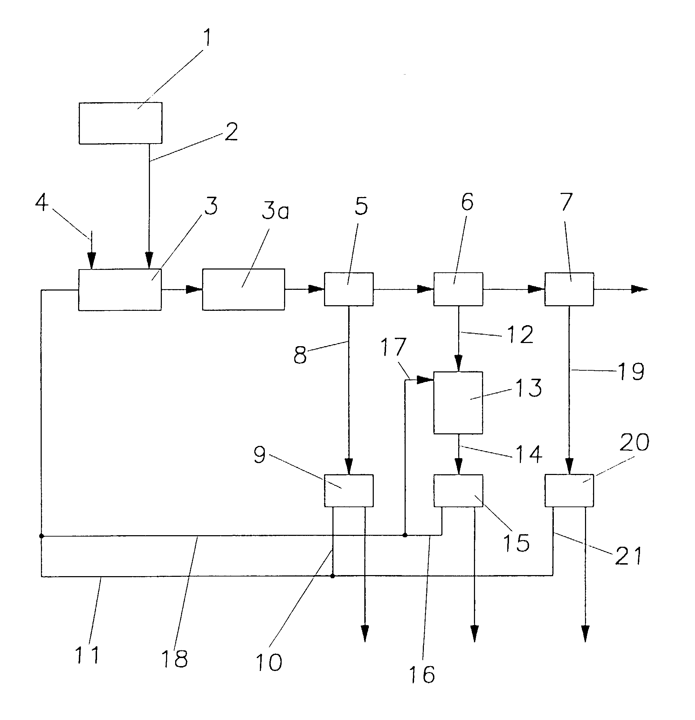

In dieser Zeichnung ist als sogenanntes Blockschaltbild eine Vorrichtung gezeigt, mit der das meist durch eine mehrstufige Zerkleinerung gewonnene Pulver von Altbatterien - dies sind Haushalts- und Gerätebatterien - für eine Extraktion mittels einer Säure aufgeschlossen werden kann und aus der säurehaltigen Metallsalzlösung in mehreren Schritten jeweils ein Metall durch Elektrolyse abgetrennt werden kann. Dabei wird darauf hingewiesen, daß dieses Pulver zumindest weitgehend von Reststoffen - darunter sind in diesem Fall Eisen, Aluminium, Buntmetalle, Kunststoffe und Papier zu verstehen - befreit wurde. Dieses Pulver befindet sich in einem Vorratsbehälter 1, der über eine Leitung 2 mit mindestens einer Extraktionseinheit 3 verbunden ist. Über eine an sich bekannte, in der Zeichnung nicht dargestellte Dosiereinrichtung, die im Bodenbereich des Vorratsbehälters 1 angeordnet sein kann, gelangt das gemahlene Pulver der Altbatterien in genau vorgegebener Menge in die Extraktionseinheit 3.

In der Extraktionseinheit 3 befindet sich eine verdünnte Säure, beispielsweise Schwefelsäure, die eine Konzentration von 1% - 50%, vorteilhaft von 5% - 20%, aufweist. Diese verdünnte Säure, es kann auch ein Säuregemisch sein, wird beispielsweise dadurch erreicht, daß zunächst in einem nicht dargestellten Ansatzbehälter Wasser eingefüllt und anschließend mit der höher konzentrierten Säure gemischt wird. über eine Leitung 4 gelangt diese verdünnte Säure dann in die Extraktionseinheit 3.

In der Extraktionseinheit 3 werden die im zugeführten Pulver enthaltenen Metalle, die als reine Metalle, Metallsalze und/oder Metalloxide vorliegen können, aufgeschlossen und gehen in Lösung. Nach dem Durchlauf einer Abtrenneinrichtung 3a, in der unter anderem auch Manganoxid abgeschieden wird, gelangt die säurehaltige Metallsalzlösung zu mehreren nachgeschalteten Extraktionsstufen 5 - 7. Diese Extraktionsstufen 5 - 7 bestehen in vorteilhafter Weise zunächst aus jeweils einer Ionenaustauschereinheit, die mit einem besonderen, auf das jeweils abzuscheidende Metall abgestimmten Harzbett gefüllt sind. In der ersten Extraktionsstufe 5 wird beispielsweise eine wässrige Metalllösung A abgetrennt, die über eine Leitung 8 zu einer Elektrolyseeinheit 9 gelangt. Hier wird das Metall A abgeschieden. Die verbleibende, stark säurehaltige, jedoch an Metall verarmte Elektrolytlösung wird über eine Leitung 10 und eine Leitung 11, gegebenenfalls über einen Vorratsbehälter, wieder der Extraktionseinheit 3 zugeführt, wo dieselbe dann erneut zum Aufschließen des Batteriepulvers verwendet werden kann.

In der zweiten Extraktionsstufe 6 wird über eine Leitung 12 eine wässrige, Zink und Mangan enthaltende Lösung abgeschieden. Nach dem Durchlauf durch eine zweistufige Reextraktionseinheit 13, in der zunächst Mangan und anschließend Zink reextrahiert werden, tritt über eine Leitung 14 eine wässrige Zinklösung aus, die dann ebenfalls zu einer Elektrolyseeinheit 15 gelangt. Hier wird das Zink abgeschieden. Über eine Leitung 16 tritt eine verarmte Zink-Elektrolytlösung aus, die entweder über eine Leitung 17 erneut in der Reextraktionseinheit 13 zur Reextraktion von Zink verwendet werden kann. Über eine Leitung 18 kann jedoch die aus der Elektrolyseeinheit 15 austretende verarmte Zink-Elektrolytlösung ebenfalls der Extraktionseinheit 3 zur erneuten Aufschließung des gemahlenen Pulvers aus Altbatterien verwendet werden.

In der dritten Extraktionsstufe 7 wird beispielsweise ein Metall B abgeschieden. Über eine Leitung 19 tritt aus der Extraktionsstufe 7 eine wässrige Metalllösung B aus, die ebenfalls einer Elektrolyseeinheit 20 zugeführt wird. Nach der Abscheidung des Metalles B tritt über eine Leitung 21 eine stark säurehaltige, jedoch an Metall B verarmte Elektrolytlösung aus, die in gleicher Weise - gegebenenfalls über einen Vorratsbehälter - wieder der Extraktionseinheit 3 zur erneuten Aufschließung des Metallpulvers zugeführt werden kann. Bedarfsweise können sich weitere Extraktionsstufen zur Abtrennung weiterer Metalle anschließen. Bei dieser Aufschließung des Pulvers wirken sich die niedrigen Restmetallkonzentrationen, die sich noch in der stark säurehaltigen Elektrolytlösung befinden können, nicht nachteilig aus. Die Säure wird hier, ohne daß ein besonderer, aufwendiger Aufarbeitungsvorgang eingeschaltet werden muß, im Kreislauf geführt.

## Patentansprüche

1. Verfahren zur hydrometallurgischen Aufbereitung von verbrauchten Haushalts- und Gerätebatterien zur Wiedergewinnung der metallischen Rohstoffe, insbesondere Zink, Nickel, Cadmium, Kupfer, Lithium und Mangan, bei dem das durch Zerkleinerung der Batterien und Abtrennung von Reststoffen entstandene feine Pulver mittels einer Säure aufgeschlossen und dabei der in dieser Säure lösliche Anteil der metallischen Inhaltsstoffe des Pulvers extrahiert wird,
dadurch gekennzeichnet,
daß die in Lösung gebrachten metallischen Inhaltsstoffe des Pulvers durch getrennte Extraktionsstufen voneinander separiert werden, daß die so separierten Metallösungen getrennt voneinander elektrolysiert werden und daß die an den jeweiligen Metallen verarmten Elektrolytlösungen nach der Elektrolyse ohne Trennung der Säure vom Restmetallgehalt zum Aufschluß des gemahlenen Batterie-Pulvers verwendet werden.

## Claims

1. Method for the hydrometallurgical treatment of used domestic and portable batteries in order to recover the metallic raw materials, in particular zinc, nickel, cadmium, copper, lithium and manganese, in which the fine powder produced by comminuting the batteries and separating off waste is decomposed by means of an acid and then the fraction of the metallic ingredients of the powder soluble in this acid is extracted, characterised in that the metallic ingredients of the powder brought into solution are separated from one another by means of separate extraction stages, that the metal solutions separated in this manner are electrolysed separately from one another and that the electrolytic solutions with a reduced content of the respective metals are used after electrolysis, without the acid being separated from the residual metal content, for the decomposition of the ground battery powder.

## Revendications

1. Procédé de traitement hydrométallurgique de batteries domestiques et industrielles usées pour récupérer les matières premières métalliques, en particulier le zinc, le nickel, le cadmium, le cuivre, le lithium et le manganèse, dans lequel on attaque au moyen d'un acide la poudre fine apparue par concassage des batteries et séparation des résidus et on extrait la fraction des constituants métalliques de la poudre qui est soluble dans cet acide,
caractérisé en ce qu'on sépare les uns des autres par des étapes d'extraction séparées les constituants métalliques de la poudre mis en solution, en ce qu'on électrolyse séparément les uns des autres les solutions métalliques ainsi séparées et en ce qu'on utilise les solutions d'électrolyse, appauvries en les métaux considérés, après l'électrolyse sans séparer de l'acide la teneur en métal résiduelle pour désagréger la poudre de batterie broyée.
